# EUROPÄISCHE PATENTANMELDUNG

(11) **EP 2 327 606 A1**
(43) Veröffentlichungstag der Anmeldung: **01.06.2011**
(21) Anmeldenummer: 10401195.2
(22) Anmeldetag: 12.11.2010
(51) Int. Cl.: B62D 9/02, B62D 21/18, B62D 24/04

(54) **Fahrzeug, insbesondere für den Motorsport**

(30) Priorität: 27.11.2009 DE 202009016233 U
(71) Anmelder: Sommer, Maik, 09600 Weißenborn (DE)
(72) Erfinder: Sommer, Maik, 09600 Weißenborn (DE)
(74) Vertreter: Rumrich, Gabriele

(57) **Zusammenfassung**

Die Erfindung betrifft ein insbesondere motorbetriebenes Fahrzeug, für den Motorsport
- mit einer einen Trägerrahmen aufweisenden unteren Baugruppe in Form eines unteren Chassis (1), an welchem Räder (5) in zwei Achsen (Vorderachse (5.1) und Hinterachse (5.2)) und ein Motor (12) gelagert/aufgenommen sind und
- mit einer oberen Baugruppe in Form eines oberen Chassis (2), die zumindest einen Sitz (8) aufweist,
- wobei das obere Chassis (8) sich vom Sitz (8) in Richtung zum vorderen Bereich des unteren Chassis (1) erstreckt und dort mittels einer vorderen Verbindung/Lagerung mit dem unteren Chassis (1) gekoppelt ist.

## Beschreibung

Die Erfindung betrifft ein neuartiges Sportgerät, in Form eines Fahrzeuges, welches insbesondere im Motorsport Anwendung findet und ähnlich wie ein Kart im Freizeitsport und im Rennsport einsetzbar ist.

Als Motorsportgeräte sind unter anderem Zweiräder/Motorräder und Karts bekannt, die jedoch unterschiedliche Fahreigenschaften aufweisen. Insbesondere sind die Zweiräder für Fahranfänger nicht so sicher wie Karts, die vier Räder aufweisen, da sich das Zweirad bei Kurvenfahrt ins Kurveninnere neigen, wobei Winkel zwischen Fahrbahnsenkrechter und Motorradsymmetrieebene von bis zu 60° im Rennsport erreicht werden können. Durch diese systembedingte Instabilität kann das Fahrzeug auch leicht wenn andere zusätzliche Störungen (wie z.B. Fahrbahnunebenheiten) auftreten, zu weit kippen, so dass eine hohe Sturzgefahr besteht.

Weiterhin neigen Motorräder zum Pendeln. Dies ist eine komplizierte Schwingung des gesamten Motorradsystems im Frequenzbereich zwischen 3 und 4 Hertz. Hierbei vollführt das Motorrad eine gekoppelte Schwingung um Gier-, Roll- und Nickachse. Die Rollachse liegt am Anfang des Pendelns in der Verbindungslinie der Reifenaufstandspunkte, also in der Reifenaufstandslinie. Im weiteren Verlauf wandert diese Linie immer weiter in Richtung Systemschwerpunkt. Ausgelöst wird das Pendeln unter anderem von plötzlichen Lenkbewegungen, Fahrbahnunebenheiten, und anderen vorangegangenen instabilen Fahrzuständen. Unter Umständen kann es vorkommen, dass das Pendeln nicht mehr gedämpft, sondern verstärkt wird, was in der Regel zum Sturz führt.

Ein Kart (auch Go-Kart genannt) ist ein einsitziges, offenes, mit einem Verbrennungsmotor ausgerüstetes Fahrzeug, das in seiner Bauweise an Tretautos angelehnt ist.

Im Kartsport, der in diversen nationalen und internationalen Rennserien ausgetragen wird, erreichen Karts je nach Motorisierung Geschwindigkeiten von bis zu 250 km/h. Leistungsschwächere Varianten bieten aber auch Laien und insbesondere Kindern die Möglichkeit, an den Sport herangeführt zu werden. Daher war und ist der Kartsport für viele Rennfahrer der Einstieg in den Motorsport und es erfreuen sich Karts auch als Freizeitsport großer Beliebtheit. Das Chassis eines Karts besteht aus einem Rund-oder Ovalrohrrahmen aus Stahl. Da Karts keine Federung besitzen, muss der Rahmen Stöße aufnehmen können, ohne dabei zu brechen bzw. allzu stark nachzugeben. Die Steifigkeit des Chassis kann durch den Einbau zusätzlicher Stabilisatoren an die Streckenbedingungen angepasst werden. Typischerweise sitzt der Fahrer mittig, wobei der Sitz auf dem Rahmen zwischen Vorder- und Hinterachse befestigt ist. Die Kraftübertragung erfolgt vom Motor über eine Kette an die Hinterachse. Entsprechende Karts werden beispielsweise in den Druckschriften EP 1 254 802 B1 und EP 1 155 897 B1 beschrieben.

Weiterhin sind zum Einsatz im Gelände sogenannte Quads bekannt. Ein Quad (zu lat. *quadri-* "vier-") oder ATV (kurz für *All Terrain Vehicle,* deutsch: "Geländefahrzeug") ist ein kleines Kraftfahrzeug für ein bis zwei Personen mit vier Rädern mit relativ großen Reifen. Der Fahrersitz besitzt beim Quad eine Sattelform wie beim Motorrad und die Lenkung wird über eine Lenkstange betätigt.

Beispielsweise aus der Druckschrift DE 20 2005002 840 U1 ist derartiges Quad bekannt.

Eine Neigung des Fahrzeuges bei Kurvenfahrten erfolgt bei Karts und bei Quads nicht, wodurch der bei Motorrädern aufgrund der Neigung erzielte Fahrspaß damit nicht realisiert werden kann.

Die Aufgabe der Erfindung besteht darin, ein Fahrzeug, insbesondere für den Motorsport zu entwickeln, welches bei einem einfachen und kostengünstigen Aufbau die Eigenschaften und den Fahrspaß eines Zweirades mit der Sicherheit eines Karts verbindet.

Diese Aufgabe wird durch die Merkmale des ersten Patentanspruchs gelöst. Vorteilhafte Ausgestaltungen ergeben sich aus den Unteransprüchen.

Das motorbetriebenes Fahrzeug, welches insbesondere für den Motorsport, Anwendung findet weist eine unteren Baugruppe (unteres Chassis), mit einem Trägerrahmen auf, an dem die Räder in zwei Achsen (Vorderachse und Hinterachse) gelagert sind und ein Motor aufgenommen wird Weiterhin ist eine obere Baugruppe (oberes Chassis) vorgesehen, die zumindest einen Sitz und einen Lenker aufweist, wobei die obere Baugruppe aus einer sich in Richtung zur Fahrzeuglängsebene erstreckende Struktur gebildet wird, die sich vom Sitz nach unten in Richtung zum vorderen Bereich des Trägerrahmens erstreckt und dort mittels einer vorderen Lagerung mit dem Trägerrahmen gekoppelt ist, wobei der der Sitz vorzugsweise mittels wenigstens eines ersten Stoßdämpfers auf der unteren Baugruppe gelagert ist.

Die Verbindung der oberen Baugruppe mit der unteren Baugruppe erfolgt somit im Wesentlichen nur durch eine dazwischen angeordnete vordere Lagerung und durch den Stoßdämpfer, der zwischen dem Sitz der oberen Baugruppe und der unteren Baugruppe angeordnet ist, so dass sich ein äußerst einfacher und kostengünstiger Aufbau des Motorfahrzeuges gewährleistet ist. Dabei ist die vordere Lagerung, welche das obere Chassis mit dem Trägerrahmen koppelt, insbesondere so ausgebildet, dass das obere Chassis zumindest eine Bewegung in der Fahrzeuglängsebene vollführen kann.

Alternativ kann die vordere Lagerung welche das obere Chassis mit dem Trägerrahmen/unteren Chassis koppelt, aus so ausgebildet sein, dass das obere Chassis sowohl eine Bewegung in der Fahrzeuglängsebene als auch eine Neigungsbewegung bei Kurvenfahrt vollführen kann. Dadurch wird es möglich, bei einer Kurvenfahrt eine sichere Bodenhaftung der unteren Baugruppe über deren (3 oder 4) Räder zu gewährleisten und gleichzeitig eine Neigung der oberen Baugruppe zu gewährleisten, wodurch eine hohe Fahrsicherheit bei großem Fahrspaß erzielt wird. Soll lediglich eine Bewegung des oberen Chassis in der Fahrzeuglängsebene gewährleistet werden, ist die Lagerung insbesondere hülsenartig ausgeführt. Ist gleichzeitig eine Neigung der oberen Baugruppe bei Kurvenfahrten zu gewährleisten ist die Lagerung insbesondere in der Art eines ersten Kugelgelenkes/Gelenkkopflagers ausgebildet. In diesem Fall sind beidseitige Anschläge vorgesehen, die die seitliche Neigung begrenzen.

Der Lenker steht bekannter Weise über eine Lenksäule mit dem Lenkgestänge des Fahrzeuges in Verbindung und ist an seinem unteren Ende über eine bewegliche Lenkaufnahme, die insbesondere in Form eines zweiten Kugelgelenkes ausgebildet ist, gelagert und je nach Ausführung des Lagers Hülsenlager oder Kugellager) zusätzlich mit dem Trägerrahmen (oberes Chassis) oder mit dem unteren Chassis verbunden. Erfolgt nur ein Einfedern des oberen Chassis in der Fahrzeuglängsebene und ist die Lagerung dafür insbesondere hülsenartig ausgeführt, ist die Lenksäule über ein Befestigungsprofil mit dem Trägerrahmen verbunden, um ein freies Einfedern des oberen Chassis nicht zu behindern.

Wird durch eine Lagerung des oberen Chassis mittels eines ersten Kugelgelenkes/ Gelenkkopflagers zusätzlich eine Neigung der oberen Baugruppe bei Kurvenfahrten realisiert, ist Lenksäule bevorzugt mit dem oberen Chassis verbunden, um zu gewährleisten, dass sich die Lenksäule und der Lenker synchron mit dem oberen Chassis (und dem Sitz) in die Kurve legen/neigen.

In einer bevorzugten Variante erstreckt sich die Struktur des oberen Chassis aus Richtung des Trägerrahmens in einem im konvexen Bogen in Richtung bis in etwa an Sitz uns ist anschließend an ihrem hinteren Ende entgegengesetzt gebogen, wobei am hinteren Ende der Struktur der Sitz ausgebildet oder befestigt ist.

Das obere Chassis wird insbesondere aus zwei voneinander beabstandeten gebogenen Profilelementen (bevorzugt Rohre aus Metall oder Vollmaterial aus Kunststoff oder Faserverbundwerkstoff) gebildet, zwischen denen sich an ihrem oberen und hinteren Ende der Sitz erstreckt oder befestigt ist. An den unteren vorderen Enden sind die Profilelemente durch ein Verbindungselement miteinander Verbunden und über dieses an dem Trägerrahmen mit der vorderen Lagerung gelagert.

Die Profilelemente verlaufen insbesondere zueinander parallel und sind nur in einem relativ geringen Abstand, der in etwa der Sitzbreite entspricht, zueinander angeordnet, so dass eine schlanke Struktur des oberen Chassis gebildet wird.

Um ein entspanntes Fahren zu gewährleisten weist das obere Chassis einen sich in Richtung zum Lenker an den Sitzbereich anschließenden Auflagebereich auf, welcher es dem Fahrer ermöglicht, den Oberkörper darauf abzulegen.

Das obere Chassis erstreckt sich dabei aus Richtung des Trägerrahmens über den Lenker zum Sitz, so dass bei einer "liegenden" Position des Oberkörpers auf dem oberen Chassis der Lenker bequem und sicher erreichbar ist.

Das untere Chassis ist insbesondere als Trägerrahmen aller weiteren Anbauteile ausgebildet.

Vorteilhafter Weise ist das obere Chassis an seinem vorderen Bereich mit wenigstens einem zweiten Stoßdämpfer zur Aufnahme der Stoßkräfte des unteren Trägerrahmens/unteren Chassis versehen. Bevorzugt sind beidseitig an dem vorderen Bereich des oberen Chassis zweite Stoßdämpfer angeordnet, die an dem unteren Chassis befestigt sind.

Zur individuellen Einstellung des Fahrkomforts ist es möglich, insbesondere den hinteren ersten Stoßdämpfer in seiner Höhe und/oder Härte einstellbar zu gestalten. Die Höhenverstellbarkeit des Stoßdämpfers gewährleistet damit auch eine Höhenverstellung des oberen Chassis, so dass es unterschiedlichen Körpergrößen anpassbar ist.

Der hintere erste Stoßdämpfer ist an beiden Enden kugelgelagert, so dass das obere Chassis seitlich mit dem oberen Chassis bewegbar/neigbar ist.

Im Wesentlichen sind zwei Varianten des erfindungsgemäßen Fahrzeuges vorgesehen. In einer Variante für Kinder ist die Struktur /das obere Chassis in einer lediglich in der Ebene der Fahrzeuglängsachse bewegbar.

In einer Ausführung für Erwachsene ist die Struktur /das obere Chassis sowohl in der Ebene der Fahrzeuglängsachse bewegbar und zusätzlich eine Neigungsbewegung bei Kurvenfahrt gewährleistet.

Vorzugsweise ist das Kraftfahrzeug mit drei oder vier Rädern ausgestattet. Bei der erstgenannten Lösung ist die Vorderachse mit zwei Rädern und die Hinterachse mit einem Rad bestückt, bei der letztgenannten Variante weisen Vorderachse und Hinterachse jeweils zwei Räder auf.

Das erfindungsgemäße Sportgerät weist insgesamt einen Trägerrahmen (unteres Chassis) auf, der im Wesentlichen dem eines Karts entspricht und auf dem eine zum Sitzen dienende obere Baugruppe (oberes Chassis) mittels einer Lagerung verbunden ist. Seitliche vordere Stoßdämpfer können die obere Baugruppe seitlich stabilisieren, der hintere Stoßdämpfer gewährleistet ein Einfedern bei Bodenunebenheiten.

Der hintere Stoßdämpfer ist dabei an beiden Seiten kugelgelagert, so dass das obere Chassis seitliche bewegbar ist.

Das Sportgerät weist bevorzugt folgende Abmessungen für Erwachsene auf: Höhe: ca. 700 mm, Breite: ca. 500 mm, Länge: ca.1700 mm.

Die Erfindung wird nachfolgend anhand von Ausführungsbeispielen und zugehörigen Zeichnungen näher erläutert. Es zeigen:
- Figur 1: die dreidimensionale Darstellung (von vorn) eines Fahrzeuges, bevorzugt für Erwachsene, bei welchem das obere Chassis Einfedern kann und bei Kurvenfahrt neigbar ist,
- Figur 2: die dreidimensionale Einzeldarstellung des oberen Chassis,
- Figur 3: die Seitenansicht gemäß Figur 1,
- Figur 4: die Draufsicht gemäß Figur 1,
- Figur 5: die Dreidimensionale Darstellung eines Fahrzeuges gem. Fig. 1, 3, 4 schräg von hinten,
- Figur 6: Einzelheit X gemäß Figur 5,
- Figur 7: die dreidimensionale Darstellung (von vorn) des unteren und oberen Aufbau eines Fahrzeuges, welches bevorzugt für Kinder Anwendung findet und nicht bei Kurvenfahrten neigbar ist,
- Figur 8: Einzelheit Z gemäß Figur 7,
- Figur 9: Seitenansicht gemäß Figur 7,
- Figur 10: Draufsicht gemäß Figur 7,
- Figur 11 und 12: Varianten der Gestaltung des oberen Chassis.

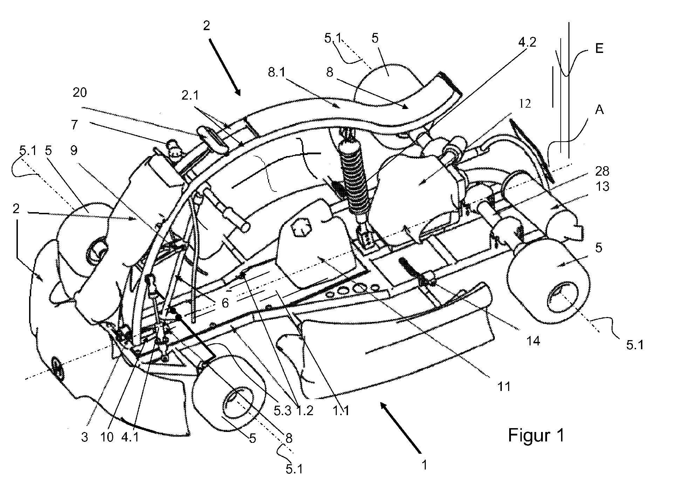

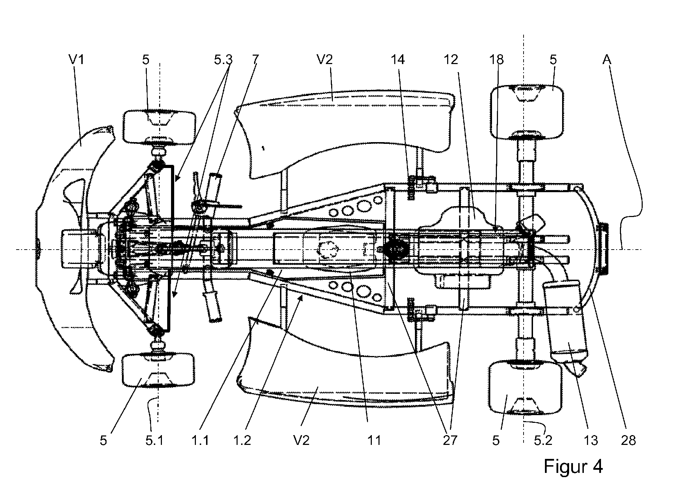

In den Figuren 1 und 3 bis 5 ist ein Fahrzeug dargestellt, in welchen die Fahrzeuglängsachse A und senkrechte Fahrzeuglängsebene E angedeutet sind. Das Kraftfahrzeug besitzt ein unteres Chassis 1 in Form eines Trägerrahmens /unteren Aufbaus, wobei das untere Chassis insbesondere die Eigenschaften wie die eines Karts aufweist. Der Vorteil dieser Bauweise ist die Sicherheit durch den niedrigen Schwerpunkt und ebenso der direkte Kontakt zur Straße durch eine nur geringe Bodenfreiheit von ca. 3 cm. Die obere Baugruppe in Form des oberen Chassis 2 wird mit dem unteren Chassis 1 im vorderen bereich des Kraftfahrzeuges durch ein Gelenkkopflager, insbesondere ein erstes Kugellager 3 verbunden. Das erste Kugellager 3 gewährleistet, dass sich das obere Chassis 2 bei Kurvenfahrten auf dem unteren Chassis 1 in die Kurve neigen kann und dass bei Bodenwellen durch das Einfedern eine Bewegung in der Fahrzeuglängsebene E möglich ist. Dabei dienen zwei vordere Stoßdämpfer 4.1, die zwischen dem vorderen Bereich des oberen Chassis 2 und dem unteren Chassis 1 befestigt sind, zur seitlichen Stabilisierung des oberen Chassis 2. Die maximale Neigung des oberen Chassis 2 wird zusätzlich durch einen Anschlag zwischen oberen und unteren Chassis 2 begrenzt, der durch die untere vordere Stirnseite 2.1 des Chassis gebildet wird und der bei einer bestimmten Neigung am Bodenblech 1.1 des unteren Chassis 1 anschlägt. Das untere Chassis 1 besitzt einen rahmenartigen Aufbau. Das Bodenblech 1.1 erstrecken sich beidseitig von vorn nach hinten Längsträger 1.2. Im hinteren Bereich weist das untere Chassis 2 im Wesentlichen nur Längs- und Querstreben auf, die hier nicht weiter bezeichnet sind.
Am unteren Chassis 2 sind vier Räder 5 paarweise in einer Vorderachse 5.1 und einer Hinterachse 5.2 angeordnet sind. Die Räder 5 der Vorderachse 5.1 werden über Querlenker 5.3 betätigt, die über eine Lenksäule 6 mit dem Lenker 7 verbunden sind.
Die Lenksäule 6 ist ebenfalls am unteren Chassis 1 mittels eines zweiten Kugellagers 8 schwenkbar gelagert und mittels eines Haltebleches 9 am oberen Chassis 2 befestigt.
Um bei Bodenwellen eine gute Dämpfung zu gewährleisten, stützt sich der hintere Bereich des oberen Chassis 2 auf dem unteren Chassis 1 über einen hinteren Stoßdämpfer 4.2 ab.
Auf dem unteren Chassis sind wie beim Kart alle weiteren Komponenten, wie Tank, 11, Motor 12, und Schalldämpfer 13 sowie weitere erforderliche und hier nicht im Einzelnen beschriebene Fahrzeugkomponenten (Kraftstoffleitung, Bremsleitung...usw.) angeordnet. Weiterhin sind beidseitige Fußrasten 14 vorgesehen.

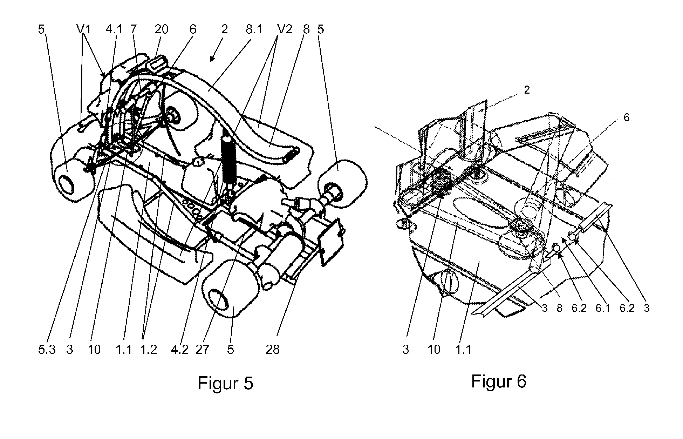

Aus Figur 6 ist ersichtlich, dass über dem Bodenblech 1.1 des unteren Chassis 1 ein Tragblech 10 angeordnet ist, welches zur Lagerung des oberen Chassis 2 mittels des ersten Kugellagers 3 und zur Lagerung der Lenksäule 6 mittels des zweiten Kugellagers 8 dient. Dadurch, dass das obere Chassis 2 und die Lenksäule 6 jeweils mittels eines Kugellagers 3, 8 in dem Tragblech 10 gelagert und über das Halteblech 9 (s. Figur 1-3) miteinander verbunden sind, werden die Bewegung des oberen Chassis 2 und die Bewegung der Lenksäule 6 miteinender gekoppelt und synchronisiert, wodurch sich bei Kurvenfahrt oberes Chassis 2 und Lenksäule 6 (und damit Lenker 7) gemeinsam um den gleichen Betrag in die Kurve neigen. An der Lenksäule 6 ist eine Gelenkplatte 6.1 befestigt. Die zwei Gelenklager 6.2 aufweist, in denen die Querlenker 5.3 gelagert sind.

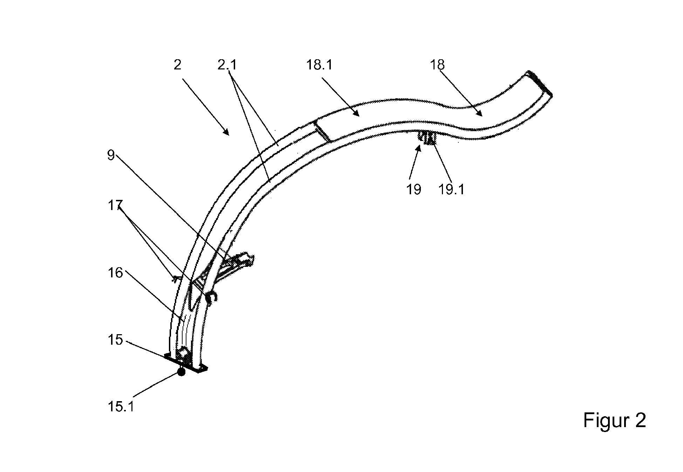

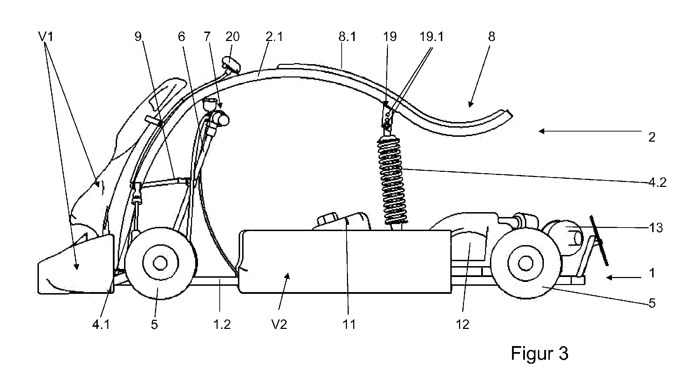

Die obere Baugruppe/das obere Chassis 2 (siehe Figur 2) besteht im Wesentlichen aus zwei gebogenen Profilelementen 2.1 (z.B. aus Rohren), die im Wesentlichen parallel zueinander verlaufen und im unteren vorderen Bereich mittels einer Verbindungsplatte 15 miteinander verbunden sind. An der Unterseite der Verbindungsplatte 15 ist eine Kugel 15.1 angeordnet, welche in dem ersten Kugellager 3 (siehe Figur 1, 3. 6) gelagert ist und die Verbindung zum unteren Chassis herstellt. Zusätzlich erstreckt sich über der Verbindungsplatte 15 zwischen den Profilelementen 2.1 ein Verbindungsblech 16. Weiterhin sind beidseitig Befestigungselemente 17 für die hier nicht dargestellten vorderen Stoßdämpfer und das Halteblech 9 für die Verbindung mit der hier nicht dargestellten Lenkstange vorgesehen. Das obere Chassis 2 erstreckt sich von der Verbindungsplatte 15 aus in einem im Wesentlichen konvexen Bogen nach oben und endet oben und hinten in einem im Wesentlichen konkaven Bogen. Am oberen Ende des oberen Chassis 2 erstreckt sich zwischen beiden Profilelemente 2.1 eine gepolsterte Sitzbank 18. Der gepolsterte Bereich setzt sich nach vorne in einen Aufliegebereich 18.1 fort, so dass der Fahrer dort seinen Oberkörper ablegen kann. Unterhalb des gepolsterten Bereichs 18, 18.1 ist eine Anbindung 19 für den hinteren Stoßdämpfer angeordnet. Die Anbindung 19 weist Befestigungsbohrungen 19.1 für den hinteren Stoßdämpfer in unterschiedlichen Höhen auf, so dass diese höhenverstellbar ist.

Aus den Figuren 1, 3 und 5 ist ersichtlich, dass sich das obere Chassis 2 in einem großen Bogen von unten nach oben hinten über den Lenker 7 erstreckt. Da der Fahrer mit seinem Oberkörper auf dem gepolsterten Bereich 8.1 aufliegt, ist diese sich unter dem Chassis 2 befindliche abgesenkte Anordnung des Lenkers 7 ergonomisch günstig. An dem oberen Chassis ist weiterhin gemäß Figur 1, und 3 bis 5 ein Display 20 vorgesehen, in welchem die Geschwindigkeit, die Zeit, die Motordrehzahl und andere fahrzeugrelevante Daten anzeigbar sind.
Weiterhin sind Frontspoiler V1 und seitliche Verkleidungen V2 vorgesehen.

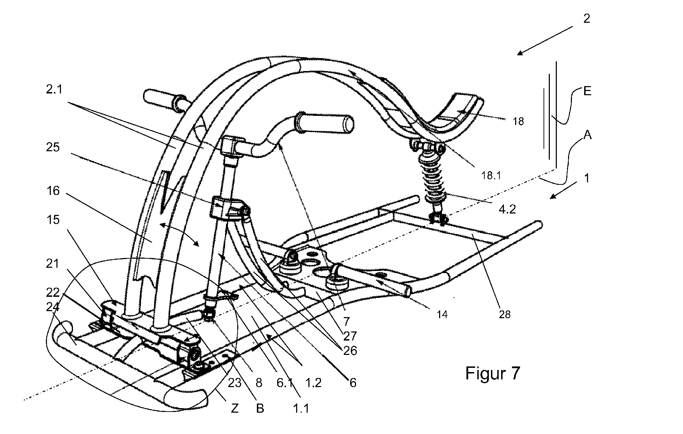

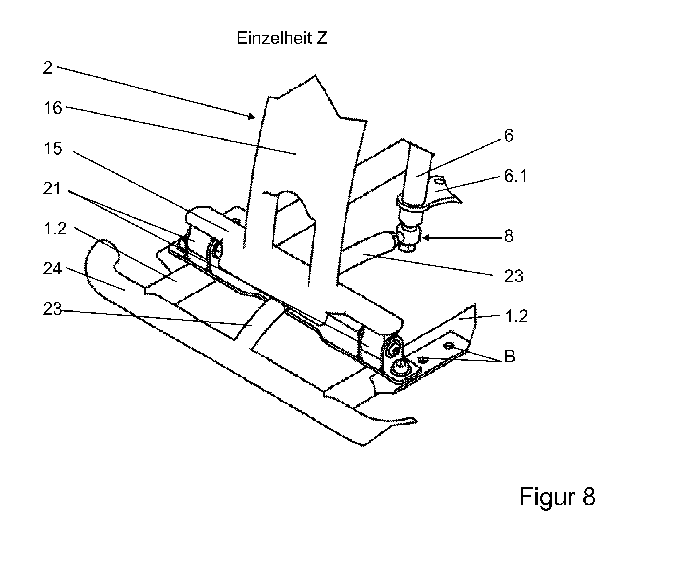

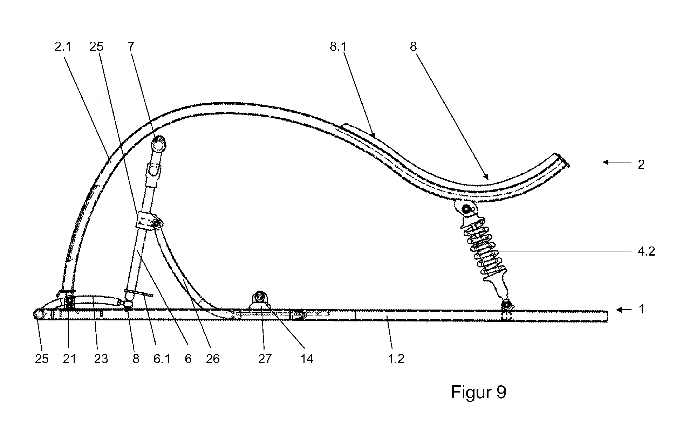

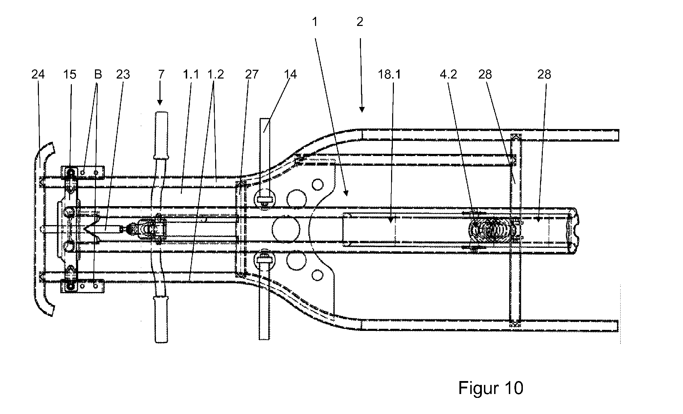

In den Figuren 7 bis 10, wobei in Figur 8 die Einzelheit Z gem. Figur 7 dargestellt ist, wird der Grundaufbau eines unteren Chassis 1 und eines oberen Chassis 2 gezeigt welches zum Einsatz für Kinder vorgesehen ist und selbstverständlich mit den erforderlichen Komponenten wie Räder, Motor, Tank usw. komplettiert wird.

Auch hier sind das untere Chassis 1 und das obere Chassis 2 (welche im Wesentlichen den gleichen Grundaufbau wie beim vorangegangenen Ausführungsbeispiel aufweisen) in einer gelenkigen Aufnahme miteinander verbunden, Im Unterschied zum vorangegangenen Ausführungsbeispiel, lässt die Lagerung jedoch nur eine Bewegung des oberen Chassis 2 in der Fahrzeuglängsebene E zu. Dazu ist am vorderen unteren Ende des oberen Chassis 2 ebenfalls eine Verbindungsplatte 15 vorgesehen. Diese ist jedoch über zwei Hülsengelenke 21, die nur eine einfache Schwenkbewegung zulassen, mit einer Befestigungsplatte 22 schwenkbeweglich verbunden. Die Befestigungsplatte 22 (und somit das obere Chassis 2) ist auf dem unteren Chassis 1 in verschiede Positionen über am unteren Chassis vorgesehene Befestigungspunkte B in Richtung der Fahrzeuglängsachse A verstellbar. Der Lenker 7 weist ebenfalls eine Lenksäule 6 auf, die an ihrem unteren Ende mittels eines zweiten Kugellagers 8 an einer Lagerstange 23 gelagert ist. Die Lagerstange 23 erstreckt sich von einem vorderen Querträger 24 frei durch den Abstand zwischen Verbindungsplatte 15 und Befestigungsplatte 22, der durch die Hülsengelenke 21 gebildet wird. Die Lenksäule 6 wird in einer Lenksäulenführung 25 geführt, von welcher aus sich Verbindungsstreben 26 zur unteren Baugruppe (einem mittleren Querträger 27) erstrecken und mit dieser verbunden sind. Auf dem mittleren Querträger 27 sind hier ebenfalls zwei Fußrasten 14 vorgesehen. Im Wesentlichen unter dem Sitzbereich (der Sitzbank 18) ist auch bei dieser Variante ein hinterer Stoßdämpfer vorgesehen der sich auf dem unteren Chassis 1 über einen hinteren Querträger 28 abstützt.
Dadurch, dass der Lenker 7 über seine Lenksäule 6 mit dem unteren Chassis 1 gekoppelt ist, kann das obere Chassis 2 bei Bodenwellen über den hinteren Stoßdämpfer 4.2 frei einfedern.
Da bei dieser Variante das obere Chassis 2 keine Neigung bei Kurvenfahrten vollführt, konnte auf die vorderen seitlichen Stoßdämpfer verzichtet werden.
Ebenso wie bei der Ausführung gem. der Figuren 1 bis 6 erstreckt sich das obere Chassis in einem großen geschwungenen Bogen von unten über den Lenker nach oben und hinten und ist an seinem hinteren Ende nach oben gebogen, so dass der Sitz nach hinten dadurch eine Anlagefläche aufweist, die Gewährleistet, dass der Fahrer nicht hach hinten vom Fahrzeug rutscht.
Auch hier schließt sich an den gepolsterten Sitz 18 nach vorn ein Auflagebereich 18.1 an.

Die Besonderheit liegt in der Konstruktion des Rohrrahmens Güte ST 37(Nahtlos-Präzisionsrohr) bzw. in der Teilung des oberen und unteren Aufbaus, wie aus der Zeichnung hervorgeht. Das obere Chassis 2 dient zum Sitzen, wohin das untere Chassis 1 als Trägerrahmen aller restlichen Anbauteile dient.

Das obere Chassis 2 wird insbesondere bei der Variante, bei welcher eine Seitenneigung bei Kurvenfahrten gewährleistet sein soll, mit dem Gelenkkopflager/erstes Kugellager 3 beweglich gehalten, ebenso wird die Lenksäule 6 an der unteren Lenkaufnahme mit dem Gelenkkopflager/zweites Kugellager 8 beweglich gehalten. Das bedeutet, dass sich das obere Chassis 2 mit der Lenksäule 6 (gem. Figur 1-6) immer in die gleiche Richtung bewegen lässt.
Das Gelenkkopflager /erste Kugellager 3 dient zur Schräglage des oberen Chassis 2, die vorderen Stoßdämpfer 4.1 dienen zur Stabilisierung. Gleichzeitig nehmen sie die Stoßkräfte des unteren Trägerrahmens/Chassis 1 auf.

Der hintere Stoßdämpfer 4.2 dient ebenfalls zur Entlastung der Krafteinwirkung und gibt dem Fahrer (Benutzer) durch die Federung ein entspanntes und sicheres Fahren. Des Weiteren dient der hintere Stoßdämpfer 4.2 zur Höhenverstellung des oberen Chassis 2. Der hintere Stoßdämpfer 4.2 ist an seinen beiden Enden der Verschraubung über eine Kugellagerung (gem. Figur 1 bis 4) gelagert. Somit werden die seitlichen Bewegungen durch das obere Chassis 2 ebenfalls ermöglicht. In der vereinfachten Variante (gemäß Figur 7 bis 10) erfolgt die Lagerung des hinteren Stoßdämpfers 4.2 an beiden Enden über eine Hülsenlagerung.
Der hintere Stoßdämpfer 4.2 dient ebenfalls dem Zweck, dass der Fahrer (Benutzer) seine optimale Abstimmung in der Höhe und Härte der Federung selbst einstellen kann. Diese Eigenschaften haben die vorderen Stoßdämpfer 4.1 ebenfalls.

Gegebenenfalls kann auch auf den hinteren Stoßdämpfer verzichtet werden, wenn das obere Chassis selbst über entsprechende federnde Eigenschaften verfügt.

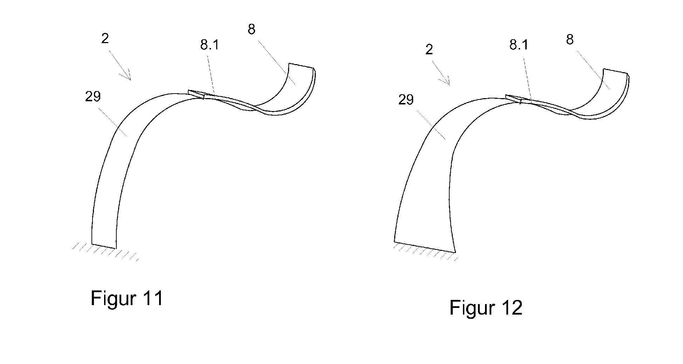

Gemäß Figur 11 und 12 ist es beispielsweise möglich, das obere Chassis 2 aus einer entsprechend gebogenen Platte 29 aus Faserverbundwerkstoff (Carbonfaserwerkstoff, Glasfaserwerkstoff, Aramidfaserwerkstoff usw.) herzustellen. Die gebogene Platte 29 weist dann ebenfalls an ihrem oberen und hinteren Bereich einen gepolsterten Bereich auf, der die Sitzbank 18 und den Auflagebereich 18 bildet. Gemäß Figur 11 weist die gebogene Platte 20 im Wesentlichen über deren Länge die gleiche Breite auf, gemäß Figur 12 verbreitert sich diese in Richtung zum ersten Chassis. Die Schraffierung am vorderen unteren Ende des ersten Chassis 2 deutet in diesem Fall die feste Verbindung mit dem unteren (nicht dargestellten) Chassis an.
Bei dieser Variante kann auch auf den hinteren Stoßdämpfer und die vordere Lagerung verzichtet werden, wenn das obere Chassis 2 eine entsprechende Eigenfederung aufweist. Insbesondere bei der Variante für Kinder kann dann das obere Chassis 2 an seinem vorderen unterem Ende fest mit dem unteren Chassis verbunden werden und sich dann frei schwingend nach hinten oben erstrecken.

Selbstverständlich kann auch anstelle einer gebogenen Platte, die als Feder wirkt, bei dieser freitragenden Struktur des oberen Chassis ein rahmenartiger Aufbau (ähnlich wie in den Figuren 1 bis 10 dargestellt) verwendet werden, wenn dieser entsprechend ausgelegt wird.

Durch die insgesamt neuartige und erfinderische spezielle Konstruktion konnte ein völlig neues Sportgerät in Form eines Kraftfahrzeuges entwickelt werden, welches die Eigenschaften eines Motorrades mit denen eines Karts verbindet und prädestiniert für den Motorsport ist.

Das Sportgerät soll unter der Bezeichnung "MOKA-TEC" vermarktet werden, dabei steht
- MO für Motorrad,
- KA für Kart und
- TEC für Technologie.

### Bezugszeichenliste

- 1: unteres Chassis
- 1.1: Bodenblech
- 1.2: Längsträger
- 2: oberes Chassis
- 2.1: Profilelemente
- 3: erstes Kugellager
- 4.1: vordere Stoßdämpfer
- 4.2: hinterer Stoßdämpfer
- 5: Räder
- 5.1: Vorderachse
- 5.2: Hinterachse
- 5.3: Querlenker
- 6: Lenksäule
- 6.1: Gelenkplatte
- 6.2: Gelenklager
- 7: Lenker
- 8: zweites Kugellagers
- 9: Halteblech
- 10: Tragblech
- 11: Tank
- 12: Motor
- 13: Schalldämpfer
- 14: Fußrasten
- 15: Verbindungsplatte
- 15.1: Kugel
- 16: Verbindungsblech
- 17: Befestigungselemente
- 18: Sitzbank
- 18.1: Auflagebereich
- 19: Anbindung
- 19.1: Befestigungsbohrungen
- 20: Display
- 21: Hülsengelenke
- 22: Befestigungsplatte 22
- 23: Lagerstange
- 24: vorderer Querträger
- 25: Lenksäulenführung
- 26: Verbindungsstreben
- 27: mittlerer Querträger
- 28: hinterer Querträger
- 29: gebogene Platte
- A: Fahrzeuglängsachse
- B: Befestigungspunkte
- E: Fahrzeuglängsebene
- V1: Frontspoiler
- V2: seitliche Verkleidung

## Patentansprüche

1. Fahrzeug, insbesondere für den Motorsport
- mit einer einen Trägerrahmen aufweisenden unteren Baugruppe in Form eines unteren Chassis (1), an welchem Räder (5) in zwei Achsen (Vorderachse (5.1) und Hinterachse (5.2)) und ein Motor (12) gelagert/aufgenommen sind und
- mit einer oberen Baugruppe in Form eines oberen Chassis (2), die zumindest einen Sitz (8) aufweist,
- wobei das obere Chassis (8) sich vom Sitz (8) in Richtung zum vorderen Bereich des unteren Chassis (1) erstreckt und dort mittels einer vorderen Verbindung/Lagerung mit dem unteren Chassis (1) gekoppelt ist.

2. Fahrzeug nach Anspruch 1, **dadurch gekennzeichnet, dass** die vordere Verbindung/Lagerung, welche das obere Chassis (2) mit dem unteren Chassis (1) koppelt, so ausgebildet ist, dass das obere Chassis zumindest eine Bewegung in der Fahrzeuglängsebene (E) vollführen kann.

3. Fahrzeug nach Anspruch 1 oder 2, **dadurch gekennzeichnet, dass** die vordere Verbindung, welche das obere Chassis (2) mit dem unteren Chassis (1) koppelt, starr ausgebildet ist und das obere Chassis frei schwingend von dieser starren Verbindung zum Sitz (8) erstreckt
oder
dass die vordere Lagerung welche das obere Chassis mit dem unteren Chassis (1) koppelt, so ausgebildet ist, dass das obere Chassis
- sowohl eine Bewegung in der Fahrzeuglängsebene als auch
- eine Neigungsbewegung bei Kurvenfahrt vollführen kann.

4. Fahrzeug nach einem der Ansprüche 1 bis 3, **dadurch gekennzeichnet, dass** die Lagerung hülsenartig oder in der Art eines Kugelgelenkes/Gelenkkopflagers ausgebildet ist.

5. Fahrzeug nach einem der Ansprüche 1 bis 4, **dadurch gekennzeichnet, dass** ein Lenker (7) über eine Lenksäule (6) mit einem Lenkgestänge des Fahrzeuges in Verbindung steht und dass der Lenker (7) zusätzlich mit dem oberen Chassis (2) oder mit dem unteren Chassis (1) verbunden ist.

6. Fahrzeug nach einem der Ansprüche 1 bis 5, **dadurch gekennzeichnet, dass** sich die Struktur des oberen Chassis (2) aus Richtung des unteren Chassis (1) in einem im konvexen Bogen in Richtung zum Sitz (8) erstreckt anschließend an ihrem hinteren Ende entgegengesetzt gebogen ist und dass am hinteren Ende der Struktur/des oberen Chassis (2) der Sitz (8) ausgebildet ist.

7. Fahrzeug nach einem der Ansprüche 1 bis 6, **dadurch gekennzeichnet, dass** das obere Chassis (2) aus zwei voneinander beabstandeten gebogenen Profilelementen (2.1) gebildet wird, zwischen denen sich der Sitz (8) erstreckt und dass das obere Chassis (2) einen sich in Richtung zum Lenker (7) an den Sitz (8) anschließenden Auflagebereich (8.1) aufweist.

8. Fahrzeug nach einem der Ansprüche 1 bis 7, **dadurch gekennzeichnet, dass** sich das obere Chassis (2) aus Richtung des unteren Chassis (1) über den Lenker (7) zum Sitz (8) erstreckt.

9. Fahrzeug nach einem der Ansprüche 1 bis 8, **dadurch gekennzeichnet, dass** das untere Chassis (1) als Trägerrahmen aller weiteren Anbauteile ausgebildet ist.

10. Fahrzeug nach einem der Ansprüche 1 bis 9, **dadurch gekennzeichnet, dass** die Lenksäule (6) an einer unteren Lenkaufnahme beweglich gehalten und mit dem oberen Chassis (2) verbunden ist derart, dass das obere Chassis (2) bei Kurvenfahrt mit der Lenksäule (6) immer in die gleiche Richtung bewegbar ist.

11. Fahrzeug nach einem der Ansprüche 1 bis 10, **dadurch gekennzeichnet, dass** das obere Chassis (2) an seinem vorderen Bereich zum unteren Chassis (1) wenigstens einen vorderen Stoßdämpfer (4.1 und/oder wenigstens einen hinteren Stoßdämpfer (4.2) zur Aufnahme der Stoßkräfte des unteren Chassis (1) aufweist.

12. Fahrzeug nach einem der Ansprüche 1 bis11, **dadurch gekennzeichnet, dass** der hintere Stoßdämpfer (4.2) in seiner Höhe und/oder Härte einstellbar ist.

13. Fahrzeug nach einem der Ansprüche 1 bis12, **dadurch gekennzeichnet,**
**dass** der hintere Stoßdämpfer (4.2) an beiden Enden kugelgelagert ist wenn das obere Chassis(2) in Richtung der Fahrzeuglängsebene (E) und seitlich bewegbar/neigbar ist
oder
**dass** der hintere Stoßdämpfer (4.2) an beiden Enden mittels eines Hülsengelenkes gelagert ist, wenn das obere Chassis (2) nur in Richtung der Fahrzeuglängsebene (E) und seitlich bewegbar/neigbar ist.

14. Fahrzeug nach einem der Ansprüche 1 bis13, **dadurch gekennzeichnet,**
- **dass** das obere Chassis (2) n einer Ausführung für Kinder lediglich in der Ebene der Fahrzeuglängsachse (A) bewegbar ist/einfedert und
- **dass** das obere Chassis (2) in einer Ausführung für Erwachsene sowohl in der Ebene der Fahrzeuglängsachse (A) bewegbar ist/einfedert als auch eine Neigungsbewegung bei Kurvenfahrt vollführen kann.

15. Fahrzeug nach einem der Ansprüche 1 bis14, **dadurch gekennzeichnet, dass** die Vorderachse (5.1) mit zwei Rädern (5) und die Hinterachse (5.2) mit einem Rad (5) oder zwei Rädern (5) bestückt sind.
